# EUROPEAN PATENT SPECIFICATION

(11) **EP 0 394 548 B1**
(45) Date of publication and mention of the grant of the patent: **10.11.1993**
(21) Application number: 89117120.9
(22) Date of filing: 15.09.1989
(51) Int. Cl.: B60P 1/64, B62D 53/06

(54) **Road trailer for container transport**
Strassenschlepper für Containertransport
Remorque routière pour transport de conteneur

(30) Priority: 24.04.1989 DK 1982/89
(43) Date of publication of application: 31.10.1990
(73) Proprietor: HFR-RODEKRO A/S, DK-6230 Rodekro (DK)
(72) Inventor: Jorgensen, Gert, DK-6200 Aabenraa (DK)
(74) Representative: Larsen, Hans Ole

(56) References cited:
- DE-A- 3 531 179
- DE-A- 3 707 566
- US-A- 4 496 187
- US-A- 4 580 805

## Description

This invention relates to a road trailer as disclosed in the preamble of claim 1, for optional transport of one container or two containers located consecutively, provided with a chassis carried by the wheels as well as a top frame carried by the chassis, which top frame is movable in and against the direction of travel between a first working position which borders on the rear end of the road trailer and a second working position advanced in the direction of travel, and which road trailer during the displacement is capable of carrying the rearmost container when transporting two containers.

One known road trailer basically similar to the trailer as described in the preamble of claim 1 has been disclosed in Danish patent application no. 4102/86 which corresponds to the specification DE-A-1 35 31 179. Road trailers of this kind are used for optional transportation of either one container with a length of 12 meters (40 feet) or of two containers located consecutively, each with a length of 6 meters (20 feet). At times, however, one container with a length of 6 meters (20 feet) needs transportation only. If said container is located on the front part of the road trailer, the entire weight will rest on the motor vehicle which is undesirable. If, on the contrary, the container is located on the back of the road trailer, the road trailer will become heavy at the rearpart, which will reduce the road-holding qualities which is likewise undesirable.

In order to obtain a weight distribution by the transportation of one short container (6 m) which is similar to that obtained by the transportation of a long container (12 m), the short container at the known road trailer is located on the top frame and during the drive it is placed in the onwardly displaced second working position. When loading and unloading is required, the top frame with the container has to be moved back into the first working position so that the container will be accessible from the rear end of the road trailer.

The top frame of the known road trailer is provided with rolls whereby it can be rolled backwards and forwards on the chassis along a roller conveyer provided thereon. The drive of the top frame arises by means of a motor connected to one of the rolls, or with a wire winch. This construction presupposes that the rolls will run smoothly, even during the heavy weight load of the container, or that a very light-powered motor or a wire winch with high gearing is used. Furthermore, the rolls must be kept smooth-running irrespective of dirt and the like.

Besides, the known construction may cause problems with respect to the drive of the top frame, if the road trailer is not standing on horizontal ground, both with regard to loosening the locking of the top frame to the chassis during load, and with regard to accelerating and braking the top frame.

The object of this invention is to provide a road trailer of the kind disclosed in the preamble of claim 1, by which the top frame will be movable in such a manner that even on sloping ground a higher degree of reliability will be achieved, and by which the disadvantages in connection with the fact that the top frame rests on transport rolls will be avoided.

As stated in claim 1 this object is achieved by providing the road trailer with means for procurement of a support of the top frame on the periphery of the wheels in such a manner that the top frame is movable when the wheels rotate.

Thus, the wheels of the road trailer serve as a kind of roller conveyer for the top frame. When the top frame is to be displaced, the support of the top frame on the periphery of the wheels mentioned in the claim is procured. In order to displace the top frame the wheels are set in motion, i.e. the road trailer is driven a distance forward or backward. If it is driven forward, the top frame, which rests on the top side of the wheels, will roll forward compared to the chassis of the road trailer. If it is driven back, the top frame will roll backwards.

By use of the construction described it is of no importance to the displacement of the top frame whether the road trailer is standing on horizontal or sloping ground, as the top frame will be displaced only when the road trailer runs. Consequently, there is no risk that the top frame will come loose from a wire winch or bolt due to motor failure or the like. During the displacement the weight of the top frame and the container rests on the wheels of the road trailer, and consequently it does not rest on small transport rolls exposed to wear and dirt.

As an example for procuring the support of the top frame on the wheels separate distance holders actuated by pressure means may be inserted between the top frame and the wheels, i.e. hydraulically actuated telescope cylinders located between two plates.

In accordance with the preferred embodiment of invention, as stated in claim 2, the top frame is provided with bearing surfaces above the wheels as well as means for lowering said bearing surfaces on to the periphery of the wheels. The bearing surfaces may, as an example, be oblong plates which are connected to the top frame by means of a cutter mechanism, and which can be stretched from the top frame by means of an eccentric mechanism or actuators driven by pressure means.

As stated in claim 3, a very simple construction is achieved if the means for lowering the bearing surfaces are composed by suspension means between the wheels and the chassis, in that the suspension means are adapted to lower the chassis together with the top frame resting thereon so far relative to the wheels that the bearing surfaces will rest on the periphery of the wheels. The suspension system of the road trailer will thereby be utilized in an entirely new way, namely to lower the entire chassis of the trailer so far relative to the wheels that the top frame will be lowered on to the periphery of the wheels. This will result in a quite considerable simplification of the construction of the top frame as it may thus be made with no movable parts at all. As it is,many suspension systems for road trailers are adjusted to a supervised raising and lowering of the chassis wherefore the above mentioned embodiment of the invention will be very easy to carry out.

The road trailer may advantageously be provided with a pneumatic suspension system as stated in claim 4. Such suspension systems are known per se, and may be adapted to the object according to the invention if a pair of bellows with a suitable length of stroke is chosen which will be slightly larger than what is usual in the known suspension systems. Consequently, it will be necessary only to elaborate the top frame in a suitable manner and provide the suspension system with very few special parts, namely suitable bellows and a control system for the lowering, wherefore a road trailer constructed in accordance with this can be produced at a very competitive price.

The control system for the lowering can be elaborated in a very simple manner, as stated in claim 5, if the top frame is provided with a holding mechanism for the chassis which holding mechanism serves to carry the chassis when the top frame is supported on the periphery of the wheels, and which holding mechanism in so doing allows displacement of the top frame relative to the chassis. Therefore, it is not necessary to be attentive to how far the chassis has been lowered, in that the chassis is secured against being lowered to far as the holding mechanism will catch it when the top frame rests on the wheels.

As stated in claim 6, the holding mechanism may be composed of rolls secured to the top frame which rolls engage under an edge, band or the like provided on the chassis for that purpose.

It will be natural to provide the road trailer with stoppers of the movement of the top frame, as stated in claims 7 and 8.

As stated in claims 9 and 10, it is particularly advantageous to provide the road trailer with an engageable stopper of the movement of the top frame, since, in case of empty running, the stopper can be used to lock the top frame in the first working position, and by transportation of two containers.

The invention will now be described more closely in connection with an explanation of a preferred embodiment of the invention and with reference to the accompanying drawings, in which:
- Fig. 1: is a top view of a road trailer chassis according to the invention,
- Fig. 2: is a side view of the road trailer by transport of one long container,
- Fig. 3: is a side view of the road trailer by transport of two short containers,
- Fig. 4-6: show the re-adjustment of the road trailer to transportation of one short container, and
- Fig. 7 and 8: show a simplified cross section through the rear end of the road trailer in transport position and during displacement of the top frame of the road trailer, respectively.

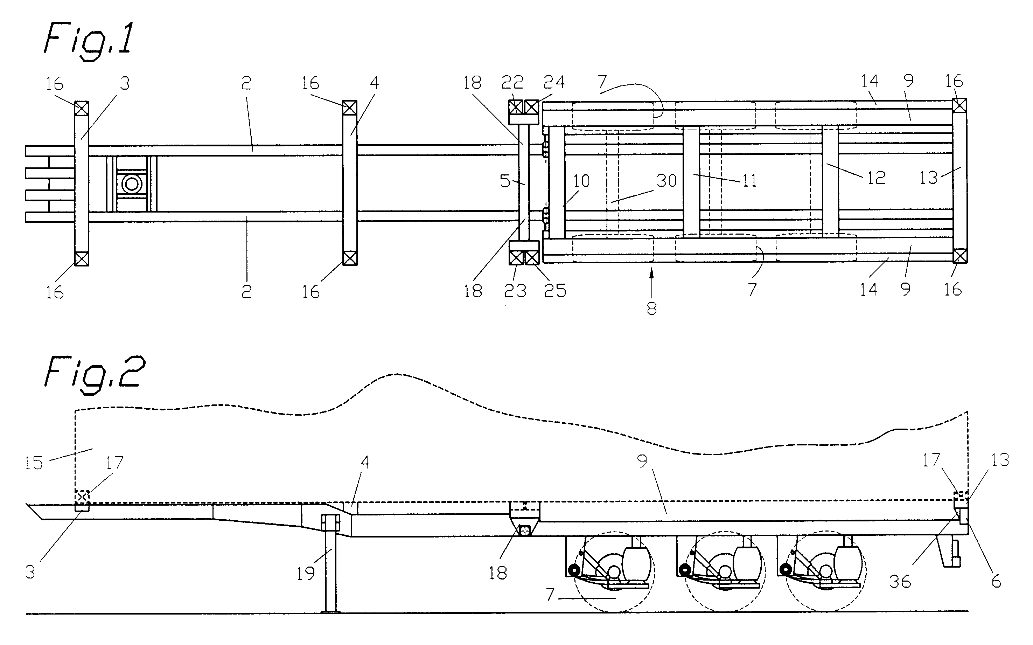

The road trailer chassis 1 shown in Figure 1 has been constructed around two longitudinal side members 2 between which cross members stretch out, as shown by e.g. 3,4, and 5. The chassis formed by the side members and the cross members is carried by three pairs of wheels 7 suspended on the side members 2. The wheels and their axles are indicated merely by a dot-and-dash line, and details of the wheel suspension are been shown. On top of the side member 2 a top frame 8 is resting, which top frame is welded together of two longitudinal frame girders 9 and four transverse frame girders 10, 11, 12, 13. Under each longitudinal frame girder 9 a through-going guard plate 14 has been welded on. The guard plates 14 serve as guards for the wheels 7, but they also serve a special purpose in connection with the displacement of the top frame relative to the side members, as will be explained below. Furthermore, on the front part of the chassis coupling details for the coupling of the road trailer with a motor vehicle are visible. These details will not be further explained.

Figure 2 shows a side view of the road trailer during transportation of one long container 15 with a length of 12 m (40 feet). The container 15 rests on the foremost cross member 3 of the chassis and the rearmost frame girder 13 of the top frame. Coupling or locking devices 16 have been mounted on these transverse girders (see Figure 1), which locking devices might be 150 container locks. Said locking devices 16 engage in corresponding locking devices 17 on the container 15, wherefore the container is secured against being displaced on the road trailer. As will appear from Figure 2 the container 15 is moreover supported by the cross member 4 and the top frame 8 as well as by two revolving arms 18 each provided with two locking devices which will be described more closely below. The front part of the trailer is supported by down-folding supporting legs 19 when the road trailer is standing on its own.

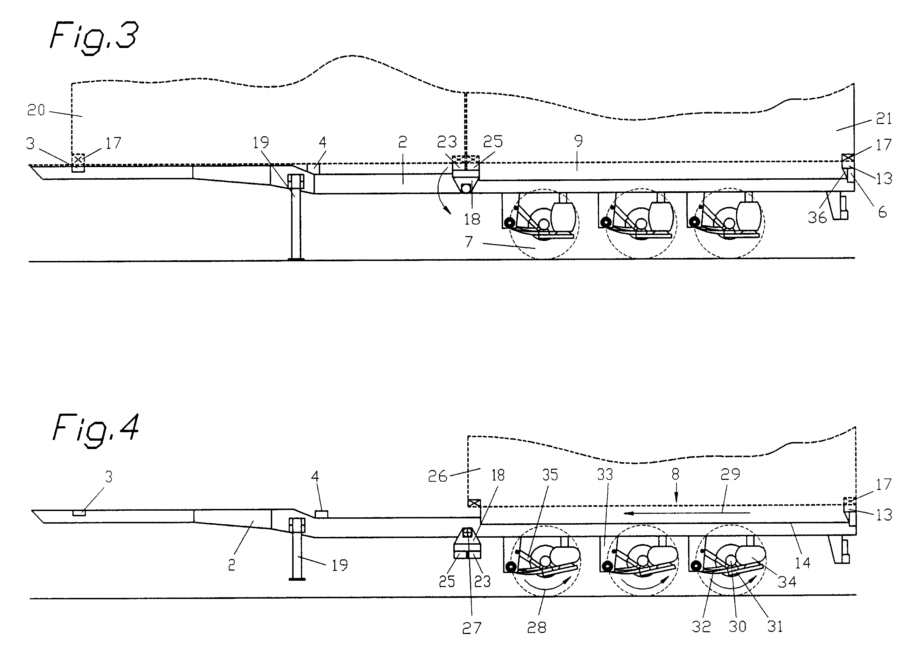

Figure 3 shows a side view of the road trailer during transportation of two shorter containers 20, 21 both with a length of 6 m (20 feet). Here the foremost container 10 rests on the foremost cross member 3 and on the two foremost elements 22, 23 of four locking elements 22 - 25 (see Figure 1) located two and two on the revolving arms 18. The front part of the rearmost container 21 rests on the other two locking elements 24, 25, on the arms 18, and the rear end rests on the rearmost transverse frame girder 13 on the top frame 8. Moreover, the rearmost container 21 is supported by the longitudinal frame girders 9 of the top frame in the majority of its length.

Figure 4 shows the road trailer during the re-adjustment for transport of one short container 26 only. The re-adjustment is initiated by revolving the arms 18 with the locking devices 22 - 25 around the axis 27, as shown in figure 3. Then the two longitudinal side members 2 are lowered as far down between the wheels 7 that the guard plates 14 touch the top side of the wheels 7, whereby the top frame 8 is lifted slightly above the side members 2. The road trailer is now driven a distance forward so that the wheels 7 will rotate as shown by the arrows 28. The top frame 8 will thereby be displaced and will now rest on the periphery of the wheels, ahead relative to the side members 2 as shown by the arrow 29.

The lowering of the side members 2 between the wheels 7 is performed by means of the pneumatic suspension system shown in Figure 2 - 6. The axle 30 of each wheel is suspended in a hanger 31 on a short flat spring 32. The one end of the flat spring has been suspended pivotally on a bracket 33 on one of the side members 2. The other end of the flat spring has been secured to one end of a pair of pneumatic bellows 34, whose other end is located on the side number 2.

The short flat springs 32 serve as a lever arm for the side members. The side members 2 may be raised or lowered relative to the wheels 7 by inflating the bellows 34 more or less strongly. If air is let out of the bellows so that they yield ,as shown in Figure 4, the side members 2 will be lowered between the wheels in that the flat springs 32 will revolve around the whell axles 30. It is this kind of a lowering which is made preparatory to the horizontal displacement of the top frame 8, as shown in Figure 4. The shown pneumatic suspension system comprises shock absorbers 35, and except from the fact that bellows 34 are used with a suitable length of stroke being slightly larger than the length of stroke usually used in such suspension systems, the construction is conventional.

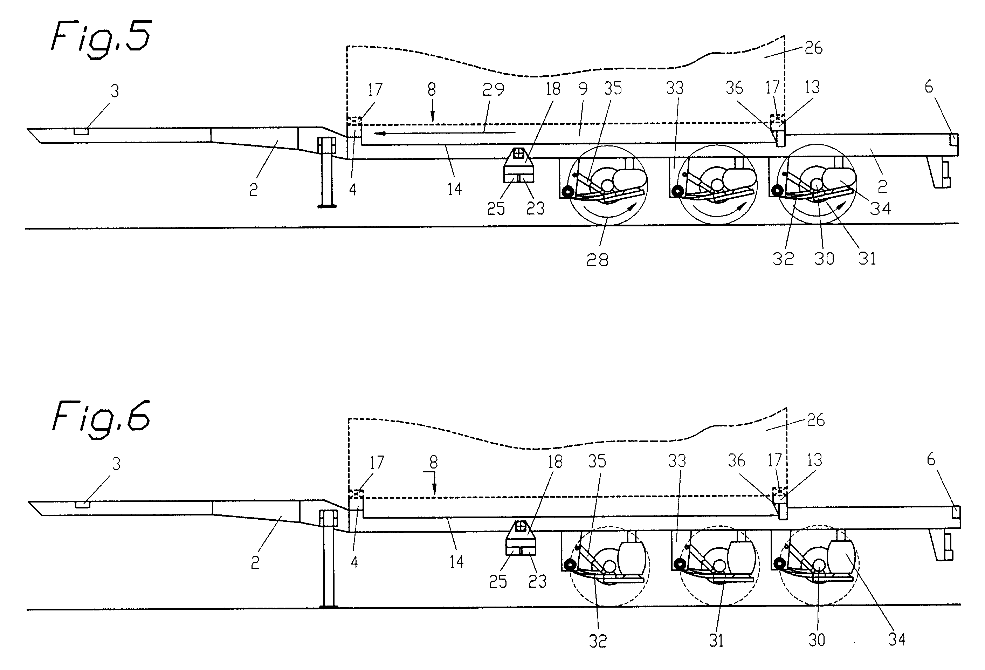

Figure 5 shows the road trailer with the top frame 8 and the container 26 displaced as far ahead that the front part of the top frame bumps against the cross member 4. In this connection the cross member 4 serves as a stationary stopper of the top frame 8. The position shown in Figure 5 is the second working position of the top frame, in that the first working position of the top frame has been shown in Figures 2, 3 and 4 in which the top frame 8 borders on the rear end of the road trailer.

Figure 6 shows the road trailer with the top frame 8 in the second working position and ready to drive. Compared to figure 5, the difference is that the bellows 34 are now re-inflated with compressed air whereby the side members 2 have been raised from their lowered position. The guard plates 14 are hereby lifted from the periphery of the wheels 7, in that the top frame is lifted together with the side members 2. The container 26 is now secured to locking devices 16 on the cross member 4, and on the the rearmost transverse frame girder 13 on the top frame 8. Thus, the container 26 is placed in such a manner on the road trailer that its weight is distribyted almost evenly way between the motor vehicle (not shown) which is to pull the road trailer and the gearing of the road trailer, as the weight would normally have been distributed by transportation of one long or two short containers on the road trailer.

From the driving position shown in Figures 5 and 6 the container 26 may be moved back to the unloading and loading position shown in Figure 4 by undertaking the converse operation of displacement. That is to say that the chassis 2 is lowered between the wheels until the top frame 8 is supported on the periphery of the wheels, that the road trailer is driven a distance backwards so that the top frame 8 is displaced to the rear relative to the side members 2, and that the chassis is then again raised to its normal position.

During the above mentioned rear displacement of the top frame 8, a cross member 6 at the back of the side members 2 serves as a stopper of the top frame which is provided with a stop element 36 below the rearmost transverse frame girder 13.

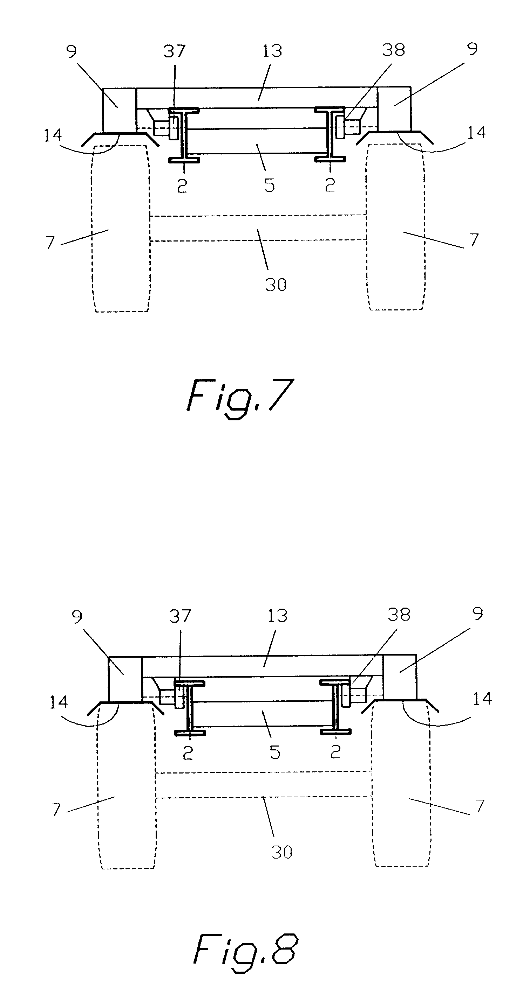

Figures 7 and 8 show a simplified cross section through the road trailer along the line VII-VII in Figure 6 and serve as an illustration of the position of the top frame relative to the side members 2 and the wheels 7. In Figure 7 the side members 2 are seen in a driving position, and the transverse frame girder 13 of the top frame is resting on the surface of the side members. In Figure 8 the side members 2 are seen in a lowered position, and the guard plates 14 of the top frame are resting on the periphery of the wheels 7. As will appear from Figure 7 and 8, the top frame 8 is provided with rolls 37 and 38 which engage below the upper longitudinal profile edge of the side members 2. Thus, in the lowered position of the side members it is the top frame 8 which is resting on the wheels 7, and which by means of the rolls 37 and 38 is carrying the side members 2 in such a manner that the top frame can be displaced relative thereto.

It should be mentioned that the revolving arms 18 can be constructed as disclosed in our Danish patent application no 1648/89. The arms serve as engageable stoppers of the top frame 8, when the top frame is in its first (rearmost) working position, and prevents the top frame from being displaced when the road trailer is driven empty.

In stead of providing the road trailer with a pneumatic suspension system which is able to raise and lower the chassis, the guard plates 14 might be made movable compared to the top frame, as an example by means of a cutter mechanism driven by pressure means. The displacement of the top frame might then take place by pressing the guard plates 14 down on the wheels 7 by means of the cutter mechanism contemplated. That would lift the top frame clear of the side members 2 and enable it to be displaced by the rotation of the wheels in the way disclosed above. Another, yet probably more expensive and more difficult technical solution might be to insert a separate lifting mechanism between the top frame 8 and the wheels 7 on each side of the road trailer.

## Claims

1. Road trailer for optional transportation of one container (15, 26) or two containers (20, 21) located consecutively, provided with a chassis (1) carried by the wheels as well as a top frame (8) carried by the chassis, which top frame (8) is movable in and against the direction of travel between a first working position which borders on the rear end of the road trailer and a second working position advanced in the direction of travel, which top frame (8) during the displacement is capable of carrying the rearmost container (21) when transporting two containers (20, 21), in that the road trailer has means (30-35) for raising and lowering the chassis (1) in such a manner that the top frame (8) can be supported on the periphery of the wheels (7) in such a manner that the top frame (8) can be displaced when the wheels (7) rotate, **characterized** in that the means (30-35) for raising and lowering the chassis (1) are composed of suspension means (30-35) between the wheels (7) and the chassis (1), that the top frame (8) on its lower side has bearing surfaces (14) arranged stationarily opposite the periphery of the wheels (7), that the top frame (8) has rolls (37, 38) which are designed to carry the chassis (1) when the top frame (8) is supported on the periphery of the wheels (7), and that the chassis (1) has a first (4) and a second stop (6), which stops (4, 6) can interact with stop devices (36) on the top frame (8) in order to limit the travel of the top frame (8).

2. Road trailer according to claim 1, **characterized** in that the suspension means (30-35) are adapted to lower the chassis (1) together with the top frame (8) as far compared to the wheels (7) that the bearing surfaces (14) will rest on the periphery of the wheels (7).

3. Road trailer according to claim 2, **characterized** in that the suspension means (30-35) are pneumatic suspension means known per se, each provided with a lever constructed as a flat spring device (32), the said lever being stretched between a bracket (33) on the chassis (1) and the one end of a pair of pneumatically inflatable bellows (34), whose other end is secured to the chassis (1), and where a wheel (7) or a gearing has been suspended on the lever between the bracket (33) and the bellows (34).

4. Road trailer according to claims 1-3, **characterized** in that the rools (37, 38) engage below an edge or band provided for this purpose on the side members (2) of the chassis (1).

5. Road trailer according to any one of the claims 1-4, **characterized** in that the first stop (4) is composed of arms (4) located on each side of the chassis (1), which arms (4) are provided with locking elements (16) to support and lock the front part of a container (26) whose rear end is supported by the top frame (8) advanced in the second working position.

6. Road trailer according to claim 5, **characterized** in that between the first (4) and the second stop (6) the chassis (1) is provided with a third stop (18), which can be engaged by the transportation of two containers (20, 21) and lock the top frame (8) in the first working position.

7. Road trailer according to claim 6, **characterized** in that the third stop (18) is composed of arms (18) located on each side of the chassis (1), which arms (18) by means of a shaft (27) mounted transversely through the chassis (1) can be revolved between an engaged and a disengaged position, which arms (18) are each provided with a first (22, 23) and a second locking element (24, 25), of which the first (22, 23) in its engaged position can support and lock the rear end of the foremost container (20), and of which the second (24, 25) can support and lock the front part of the rearmost container (21), in that the arms (18) in their disengaged position allow displacement of the top frame (8).

## Patentansprüche

1. Straßenanhänger zum wahlweisen Transport eines Containers (15, 26) oder zweier Container (20, 21), die hintereinander angeordnet sind, der mit einem Fahrgestell (1), das von den Rädern getragen wird, sowie mit einem Obergestell (8), das vom Fahrgestell getragen wird, versehen ist, wobei das Obergestell (8) in Fahrtrichtung und entgegengesetzt zu ihr zwischen einer ersten Arbeitsstellung, die an das hintere Ende des Straßenanhängers angrenzt, und einer zweiten Arbeitsstellung, die in der Fahrtrichtung vorgeschoben ist, bewegt werden kann, wobei das Obergestell (8) während der Verschiebung den hintersten Container (21) tragen kann, wenn zwei Container (20, 21) befördert werden, wobei der Straßenanhänger Einrichtungen (30 - 35) hat, mit denen das Fahrgestell (1) so angehoben und abgesenkt werden kann, daß das Obergestell (8) auf dem Umfang der Räder (7) so aufliegen kann, daß das Obergestell (8) verschoben werden kann, wenn sich die Räder (7) drehen, **dadurch gekennzeichnet**, daß die Einrichtungen (30 - 35) zum Anheben und Absenken des Fahrgestells (1) aus Aufhängungseinrichtungen (30 - 35) zwischen den Rädern (7) und dem Fahrgestell (1) bestehen, daß das Obergestell (8) an seiner Unterseite Auflagenflächen (14) hat, die unbeweglich dem Umfang der Räder (7) gegenüberliegend angeordnet sind, daß das Obergestell (8) Rollen (37, 38) hat, die das Fahrgestell (1) tragen, wenn das Obergestell (8) auf dem Umfang der Räder (7) aufliegt, und daß das Fahrgestell (1) einen ersten (4) und einen zweiten (6) Anschlag hat, wobei die Anschläge (4, 6) mit Anschlagvorrichtungen (36) am Obergestell (8) zusammenwirken können, um die Bewegung des Obergestells (8) zu begrenzen.

2. Straßenanhänger nach Anspruch 1, **dadurch gekennzeichnet**, daß die Aufhängungseinrichtungen (30, 35) das Fahrgestell (1) zusammen mit dem Obergestell (8) in Bezug auf die Räder (7) soweit absenken können, daß die Auflageflächen (14) auf dem Umfang der Räder (7) aufliegen.

3. Straßenanhänger nach Anspruch 2, **dadurch gekennzeichnet**, daß die Aufhängungseinrichtungen (30 - 35) an sich bekannte pneumatische Aufhängungseinrichtungen sind, die jeweils mit einem Hebel versehen sind, der als eine Flachfedervorrichtung (32) ausgeführt ist, wobei sich der Hebel zwischen einer Halterung (33) am Fahrgestell (1) und dem einem Ende eines pneumatisch aufblasbaren Blasebalgs (34) erstreckt, dessen anderes Ende am Fahrgestell (1) befestigt ist, und wobei ein Rad (7) oder ein Getriebe zwischen der Halterung (33) und dem Balg (34) am Hebel aufgehängt ist.

4. Straßenanhänger nach Anspruch 1, **dadurch gekennzeichnet**, daß die Rollen (37, 38) unterhalb einer Kante oder einer Leiste, die zu diesem Zweck an den Seitenelementen (2) des Fahrgestells (1) vorhanden ist, anliegen.

5. Straßenanhänger nach einem der Ansprüche 1 bis 4, **dadurch gekennzeichnet**, daß der erste Anschlag (4) aus Armen (4) besteht, die sich zu beiden Seiten des Fahrgestells (1) befinden, wobei die Arme (4) mit Arretierelementen (16) versehen sind, die das Vorderteil eines Containers (26) tragen und arretieren, dessen hinteres Ende vom Obergestell (8) getragen wird, das in die zweite Arbeitsstellung vorgeschoben ist.

6. Straßenanhänger nach Anspruch 5, **dadurch gekennzeichnet**, daß zwischen dem ersten (4) und dem zweiten (6) Anschlag das Fahrgestell (1) mit einem dritten Anschlag (18) versehen ist, der bei der Beförderung von zwei Containern (20, 21) in Eingriff kommen kann und das Obergestell (8) in der ersten Arbeitsstellung arretieren kann.

7. Straßenanhänger nach Anspruch 6, **dadurch gekennzeichnet**, daß der dritte Anschlag (18) aus Armen (18) besteht, die sich zu beiden Seiten des Fahrgestells (1) befinden, wobei die Arme (18) mittels einer Welle (27), die quer durch das Fahrgestell (1) angebracht ist, zwischen einer Eingriffs- und einer Lösestellung gedreht werden können, wobei die Arme (18) jeweils mit einem ersten (22, 23) und einem zweiten (24, 25) Arretierelement versehen sind, wobei das erste (22, 23) in seiner Eingriffsstellung das hintere Ende des vordersten Containers (20) tragen und arretieren kann, und wobei das zweite (24, 25) das Vorderteil des hintersten Containers (21) tragen und arretieren kann, und daß die Arme (18) in ihrer Lösestellung Verschiebung des Obergestells (8) ermöglichen.

## Revendications

1. Remorque routière pour le transport optionnel d'un conteneur (15, 26) ou de deux conteneurs (20, 21) placés l'un à la suite de l'autre, comportant un châssis (1) porté par les roues ainsi qu'un cadre supérieur (8) porté par le châssis, lequel cadre supérieur (8) est mobile dans le sens de la course et en sens inverse entre une première position de travail qui atteint l'extrémité arrière de la remorque routière et une seconde position de travail avancée dans le sens de la course, lequel cadre supérieur (8), durant le déplacement, est capable de porter le conteneur (21) situé le plus en arrière lors du transport de deux conteneurs (20, 21), la remorque routière comportant des moyens (30-35) pour faire monter et descendre le châssis (1) de manière que le cadre supérieur (8) puisse être supporté sur la périphérie des roues (7) afin que le cadre supérieur (8) puisse être déplacé lorsque les roues (7) tournent, caractérisée en ce que les moyens (30-35) destinés à faire monter et descendre le châssis (1) sont composés de moyens de suspension (30-35) entre les roues (7) et le châssis (1), en ce que le côté inférieur du cadre supérieur (8) présente des surfaces d'appui (14) disposées fixement en opposition à la périphérie des roues (7), en ce que le cadre supérieur (8) comporte des galets (37, 38) qui sont conçus pour porter le châssis (1) lorsque le cadre supérieur (8) est supporté sur la périphérie des roues (7), et en ce que le châssis (1) comporte une première butée (4) et une seconde butée (6), lesquelles butées (4, 6) peuvent interagir avec des dispositifs d'arrêt (36) sur le cadre supérieur (8) afin de limiter la course du cadre supérieur (8).

2. Remorque routière selon la revendication 1, caractérisée en ce que les moyens de suspension (30-35) sont conçus pour faire descendre le châssis (1) avec le cadre supérieur (8) assez loin par rapport aux roues (7) pour que les surfaces d'appui (14) reposent sur la périphérie des roues (7).

3. Remorque routière selon la revendication 2, caractérisée en ce que les moyens de suspension (30-35) sont des moyens de suspension pneumatiques connus, pourvus chacun d'un levier réalisé sous la forme d'un dispositif à ressort plat (32), ledit levier étant tendu entre une console (33) sur le châssis (1) et la première extrémité de deux soufflets pneumatiques gonflables (34) dont l'autre extrémité est fixée au châssis (1), une roue (7) ou une timonerie ayant été suspendue sur le levier entre le console (33) et les soufflets (34).

4. Remorque routière selon les revendications 1-3, caractérisée en ce que les galets (37, 38) portent au-dessous d'un bord ou d'une aile prévu à cet effet sur les éléments latéraux (2) du châssis (1).

5. Remorque routière selon l'une quelconque des revendications 1-4, caractérisée en ce que la première butée (4) est composée de bras (4) placés sur chaque côté du châssis (1), lesquels bras (4) sont pourvus d'éléments de verrouillage (16) destinés à supporter et verrouiller la partie avant d'un conteneur (26) dont l'extrémité arrière est supportée par le cadre supérieur (8) avancé dans la seconde position de travail.

6. Remorque routière selon la revendication 5, caractérisée en ce que le châssis (1) comporte, entre la première butée (4) et la deuxième butée (6), une troisième butée (18) qui peut être engagée par le transport de deux conteneurs (20, 21) et qui peut verrouiller le cadre supérieur (8) dans la première position de travail.

7. Remorque routière selon la revendication 6, caractérisée en ce que la troisième butée (18) est composée de bras (18) placés sur chaque côté du châssis (1), lesquels bras (18) peuvent être tournés, au moyen d'un arbre (27) monté transversalement à travers le châssis (1), entre une position engagée et une position dégagée, lesquels bras (18) sont pourvus chacun de premier (22, 23) et second (24, 25) éléments de verrouillage dont le premier (22, 23), dans sa position engagée, peut supporter et verrouiller l'extrémité arrière du conteneur (20) situé en avant, et dont le second (24, 25) peut supporter et verrouiller la partie avant du conteneur (21) situé en arrière, les bras (18), dans leur position dégagée, permettant un déplacement du cadre supérieur (8).
